# EUROPEAN PATENT APPLICATION

(11) **EP 4 105 879 A1**
(43) Date of publication of application: **21.12.2022**
(21) Application number: 21179962.2
(22) Date of filing: 17.06.2021
(51) Int. Cl.: G06T 7/00, G06N 3/02

(54) **AN UNSUPERVISED LEARNING METHOD TO DETECT TRANSPARENT, OR HARD TO SEE, ANOMALIES IN IMAGES**

(71) Applicant: FUJITSU LIMITED, Kanagawa 211-8588 (JP)
(72) Inventor: MAKARIOU, Savvas, London, W2 1SY (GB); HIDA, Yusuke, London, W13 8LY (GB)
(74) Representative: Haseltine Lake Kempner LLP

(57) **Abstract**

A method of training a neural network to detect anomalies in images comprises, in each epoch, deriving a first input to the neural network by synthesizing an anomalous image from a raw image and inputting the synthesized image to a filter module comprising a filter adapted to increase visibility of anomalies, the filter module applying successive filtering steps, comprising filtering with a first, and then a second, set of filter parameters or using a first type, and then a second type, of filter, and deriving a second input to the neural network by feeding the raw image through the filter module, and feeding the output of the filter module to a loss calculator together with an image output by the neural network, the output image representing a reconstructed image including the predicted location of each anomaly in the synthesized image.

## Description

Embodiments relate to an unsupervised learning method to detect transparent, or hard to see, anomalies in images.

Anomaly detection in images and automatic inspection of images are particular fields in which unsupervised deep learning has been successfully used, since it is not necessary to create a large, costly and time-consuming labelled dataset, and has been a particular topic of interest and research in sectors such as manufacturing and medicine. For example, manufacturing companies strive to produce the highest quality of products. In order to do so they operate and manufacture under very strict conditions and every aspect of the process is controlled and examined. Visual inspection processes may be further enhanced by the use of an anomaly detection algorithm. However, as may be seen in the MVTec dataset, which is used for benchmarking anomaly detection methods in manufacturing, there are transparent anomalies such as oil and water that may be hard to detect in images with current methods. Another sector that may benefit from detection of transparent anomalies is the retail sector, which is said to spend a significant portion of its budget on accident claims for slips, trips and falls caused by liquid spillages. Unfortunately, it is difficult to acquire anomalous data from the retail sector. Additionally, there are endless possible anomalous cases and therefore it is not possible to single out or anticipate all the scenarios that may occur. Therefore, an unsupervised anomaly detection method trained only with normal images to identify transparent anomalies may be beneficial to ensuring health and safety in shops and other public locations, such as work places, museums, etc., by raising the alert over identified liquid spillages.

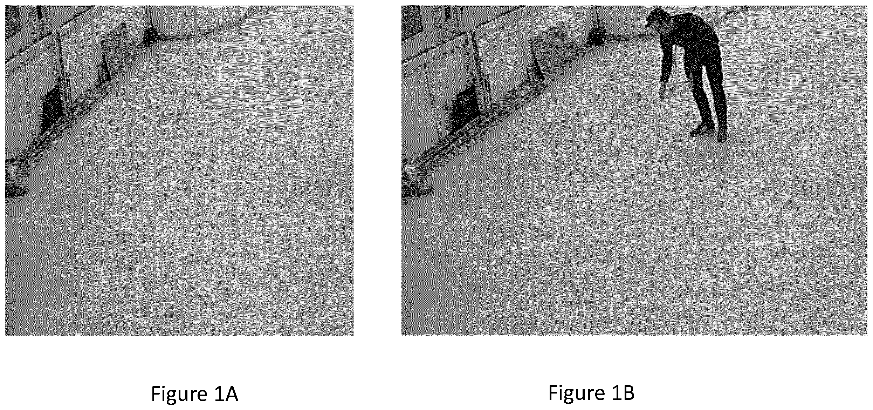

Nonetheless, even training a detection model with normal images, transparent anomalies are very difficult to detect, as are anomalies with similar colour to the background. A current anomaly detection method uses differences between RGB values to detect any anomalies; as transparency/colour similarity eliminates the majority of differences between those values, it is very hard to detect those kinds of anomalies using the current method. The difficulty of such detection is illustrated in Figures 1A and 1B, where a clear liquid, such as water, is present on the floor in Figure 1B but not Figure 1A.

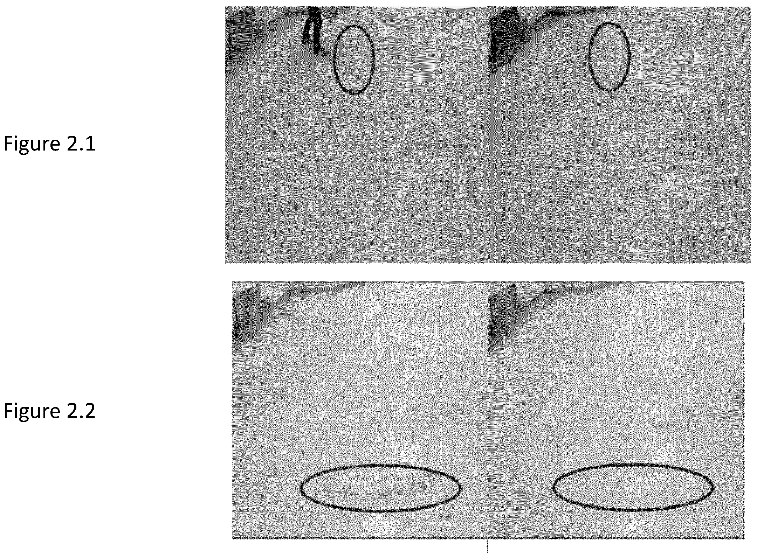

Most prior art unsupervised anomaly detection methods aim to remove defects from an anomalous image using an autoencoder trained on only defect-free data. The autoencoder learns the latent features of a defect-free image and therefore when it is used on an anomalous image it reconstructs a defect-free version. That provides the ability to detect the area of the defect by comparing the reconstructed and original image. However, even the best performing methods have a decrease in performance when dealing with transparent anomalies. For example, illustrations of an input anomalous sample (left) and its reconstructed output (right) is shown in Figures 2.1 and 2.2, the hard to see transparent anomalies being circled. The input sample has a transparent anomaly (light orange juice in Figure 2.1, red orange juice in Figure 2.2), which is not easily visible even for a human inspector. Similarly, in the reconstructed image, although the detector did manage to produce a reconstructed normal image, the difference between red, green and blue pixel (RGB) values of the two images is not enough to indicate the location of the spill. Similar issues arise with Denoising Autoencoders (DAEs) and generative adversarial networks (GANs).

As discussed above, a prior art trained network, when attempting to identify the difference between two images, looks only at the differences of colours between the pixel values. Therefore, due to the transparency or colour similarity of these anomalies, which eliminates the majority of RGB value difference, it is almost impossible to identify their location. There have been attempts to solve this issue by using a single filter with a single set of filter parameters during pre or post processing. In particular, a Sobel filter, sometimes called a Sobel-Feldman operator, is known for its use in edge detection algorithms, where it may create images emphasizing only the edges of an anomaly. The result of using the filter is either the corresponding vector or the norm of this vector. However, an application of only a single filter/set of filter parameters may not be suitable to solve the problem. A single filter/set of filter parameters may cause a noisy output or even decrease the number of channels of the input image from 3 (RGB) to 1 (Grayscale). The application of a single filter/set of filter parameters might indicate some features of the transparent anomaly, but it might also eliminate some others. In addition, it may only provide one kind of additional information. For example, a single Sobel filter in the horizontal direction will be able to identify horizontal edges and might locate the perimeter of a transparent liquid anomaly, but will not locate the whole area or the vertical edges. Unfortunately, that is not enough to detect the whole area accurately.

It is desirable to provide a reliable method of identifying transparent or hard to see anomalies. In particular, it is desirable to provide a method that may enhance the performance of previous methods in detecting transparent or hard to see anomalies.

An embodiment according to a first aspect provides a computer-implemented method of unsupervised training of a neural network to detect anomalies in images, the method comprising: acquiring a training image dataset comprising images known to be free of a type of anomaly to be detected, the type of anomaly to be detected comprising an element in the image which is transparent or an element in the image which is opaque but difficult to discern against part of the image around the element; and carrying out unsupervised training of the neural network over a plurality of epochs, wherein in each epoch: a first input is derived and fed into the neural network, the first input being derived by: synthesizing an image by superimposing on an image of the training image dataset at least one artificial anomaly of the type to be detected, and inputting the synthesized image to at least one filter module comprising at least one filter adapted to increase visibility of anomalies of the type to be detected, wherein the at least one filter module applies to the input image at least two successive filtering steps where, after a first one of the filtering steps has been applied, the input image is an image output from a preceding filtering step, and the at least two successive filtering steps comprise at least one of: filtering the input image using the at least one filter with a first set of filter parameters and then filtering the input image using the same filter with a second set of filter parameters different to the first set of filter parameters; filtering the input image using the at least one filter which is of a first type and then filtering the input image using another filter of a second type different to the first type; and a second input is derived and fed into the neural network, the second input being derived by: feeding the image of the training image dataset through the at least one filter module, and feeding an output of the at least one filter module resulting from the image to a loss calculator together with an image output by the neural network, which output image represents a reconstructed image including the predicted location of each artificial anomaly superimposed on the synthesized image.

An embodiment presents an improved method to detect transparent, or hard to see, anomalies in images, which is more accurate compared to conventional methods. Embodiments utilize a so-called "filter block", or filter module, that provides additional layers of information when dealing with transparent or hard to detect anomalies, to provide a single output which highlights latent features of images and these images are used in training to enhance performance. The proposed filter blocks examine the image differently to RGB values, so they add an additional layer of knowledge to the system when trying to detect transparent or hard to detect anomalies in images. To do so the output of the filter block is added as an additional channel to the 3 channels of RGB defect-free images in training. Learning is unsupervised and therefore beneficial as there is no need for labelled anomalous data in the training phase. Furthermore, the filter blocks may also deal with the problem of removing noise that may occur when applying a single filter/set of filter parameters.

After carrying out the unsupervised training, testing of the trained neural network may be carried out by: acquiring a testing image dataset, comprising images known to be free of the type of anomaly to be detected and images including anomalies of the type to be detected; and carrying out testing over a plurality of epochs, wherein in each epoch: a first input is derived and fed into the trained neural network, the first input being derived by feeding an image of the testing image dataset through the at least one filter module; a second input is derived and fed into an image comparer, the second input being derived by feeding the image of the testing image dataset through the at least one filter module; and feeding an output of the neural network to the image comparer, wherein an output of the image comparer is intended to indicate a location of an anomaly in the image if present.

An embodiment of a second aspect may provide a computer-implemented method of detecting anomalies in images, the method comprising: acquiring an image which is to be processed to determine whether the image contains an anomaly; and using a neural network trained in accordance with a method embodying the first aspect to detect at least one anomaly in the image; wherein an input to the trained neural network is derived from the image by feeding the image through a filter module as used in training the neural network.

An embodiment according to a third aspect may provide apparatus to train a neural network to detect anomalies in images, the apparatus comprising: at least one processor; at least one memory storing a training image dataset comprising images known to be free of a type of anomaly to be detected, the type of anomaly to be detected comprising an element in the image which is transparent or an element in the image which is opaque but difficult to discern against part of the image around the element; an image synthesizer to synthesize an image by superimposing on an image of the training image dataset at least one artificial anomaly of the type to be detected; at least one filter module comprising at least one filter adapted to increase visibility of anomalies of the type to be detected, the at least one filter module applying to an input image at least two successive filtering steps where, after a first one of the filtering steps has been applied, the input image is an image output from a preceding filtering step, and the at least two successive filtering steps comprise at least one of: (i) filtering the input image using the at least one filter with a first set of filter parameters and then filtering the input image using the same filter with a second set of filter parameters different to the first set of filter parameters; and (ii) filtering the input image using the at least one filter which is of a first type and then filtering the input image using another filter of a second type different to the first type; and a loss calculator to calculate an error between input images; the at least one memory further storing instructions to cause the processor to carry out unsupervised training of an neural network over a plurality of epochs, wherein in each epoch: a first input is derived and fed into the neural network, the first input being derived by inputting a synthesized image from the image synthesizer to the at least one filter module, and a second input is derived and fed into the neural network, the second input being derived by feeding the image of the training image dataset used to obtain the synthesized image through the at least one filter module, and feeding an output of the at least one filter module resulting from the image to the loss calculator together with an image output by the neural network, which output image represents a reconstructed image including the predicted location of each artificial anomaly superimposed on the synthesized image.

Apparatus embodying the third aspect may further comprise an image comparer, wherein the at least one memory further stores: a testing image dataset, comprising images known to be free of the type of anomaly to be detected and images including anomalies of the type to be detected, and instructions to cause the processor, after carrying out the unsupervised training, to carry out testing of the trained neural network over a plurality of epochs, wherein in each epoch: a first input is derived and fed into the trained neural network, the first input being derived by feeding an image of the testing image dataset through the at least one filter module; a second input is derived and fed into the image comparer, the second input being derived by feeding the image of the testing image dataset through the at least one filter module; and feeding an output of the neural network to the image comparer, wherein an output of the image comparer is intended to indicate a location of an anomaly in the image if present.

In a method embodying the first aspect or apparatus embodying the third aspect, in the case of training and/or testing, synthesizing the images may comprise superimposing on the image at least one artificial anomaly selected at random from a set of artificial anomalies differing from one another in at least one of transparency, size and shape.

In a method embodying the first aspect or apparatus embodying the third aspect, in the case of training and/or testing, each filter in the at least one filter module may be one of: a Sobel filter; a normalizing filter; a blur filter.

In a method embodying the first aspect or apparatus embodying the third aspect, in the case of training and/or testing, inputting the synthesized image to at least one filter module may comprise inputting the synthesized image in parallel to at least two filter modules, and the output of the at least one filter module comprises the outputs of the at least two filter modules.

In a method embodying the first aspect or apparatus embodying the third aspect, in the case of testing, feeding the image of the testing image dataset through the at least one filter module comprises feeding the image in parallel to the at least two filter modules and obtaining the outputs of the at least two filter modules.

In a method embodying the first aspect or apparatus embodying the third aspect, in The anomaly to be detected may be at least one of: a transparent liquid on a surface; an opaque liquid on a surface of the same or similar colour as the liquid; a transparent substance; an opaque substance against a background of the same or similar colour as the substance; a transparent object; an opaque object against a background of the same or similar colour as the object.

An embodiment according to a fourth aspect may provide apparatus to detect anomalies in images comprising: a neural network trained to detect anomalies in images, where the neural network has been trained in accordance with a method embodying the first aspect, or has been trained by apparatus embodying the third aspect; a memory storing an image which is to be processed to determine whether the image contains an anomaly; and at least one filter module, as used in the training of the neural network, to receive the image to be processed and output a filtered image to the neural network.

Embodiments described below refer to training an autoencoder, but embodiments may be applied to any neural network and do not depend on a specific network structure.

In addition to identifying transparent or hard to see anomalies in images of public locations such as shops, museums and workplaces, etc., embodiments may be useful in other scenarios, for example manufacturing product inspection lines, safety for workers in infrastructure or manufacturing, or leak detection in houses, stores, warehouses, etc.

Reference will now be made, by way of example, to the accompanying drawings, in which:
Figures 1A and 1B (described above) are images illustrating the difficulty of detecting transparent anomalies;
Figures 2.1 and 2.2 (described above) are images illustrating an input anomalous sample (left) and its reconstructed output (right);
Figure 3A is a flowchart of a method of unsupervised training of an autoencoder according to an embodiment;
Figure 3B is a block diagram of training apparatus suitable for training an autoencoder in accordance with the method of Figure 3A;
Figure 4 is a block diagram illustrating the features of a filter block for use in an embodiment;
Figure 5 shows an example image output from a filter block (right hand side) compared to an unfiltered image containing transparent anomalies (left hand side);
Figure 6 is a block diagram of an anomaly detection system according to an embodiment;
Figure 7 is a flowchart of a testing method according to an embodiment;
Figures 8A and 8B are block diagrams of multiple filter blocks;
Figure 9 is a diagram of network architecture for training and testing according to an embodiment;
Figure 10 shows comparative images; and
Figure 11 is a block diagram of a computing device suitable for carrying out a method according to an embodiment.

Providing additional information to a network to be trained as an anomaly detector may improve performance when identifying transparent or hard to detect anomalies in images. In order to do so, in an embodiment additional layers of information/channels from respective filter blocks are added alongside RGB pixel values to the training stage. This allows the network to look at other aspects of the image and to have additional knowledge when looking to detect a transparent or hard to see anomaly in images.

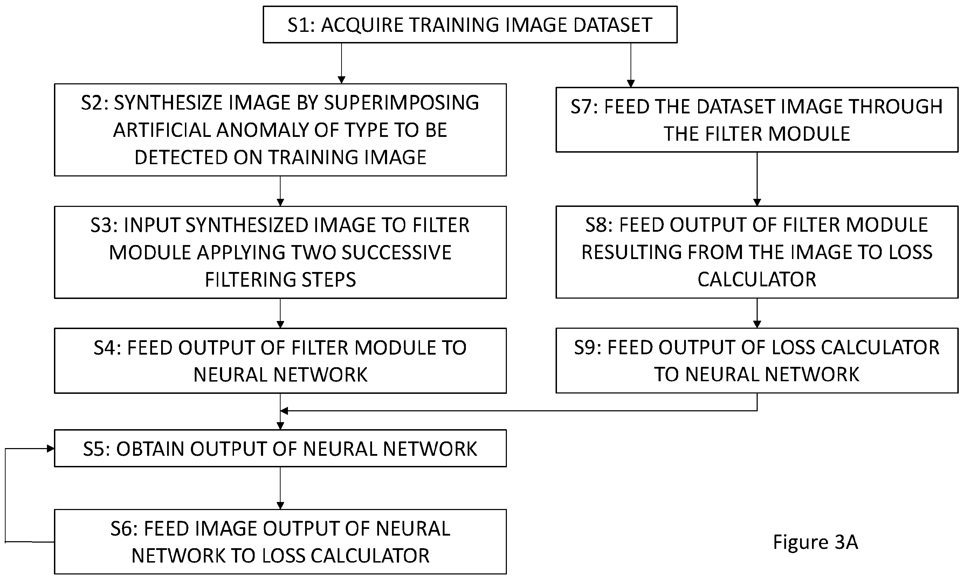

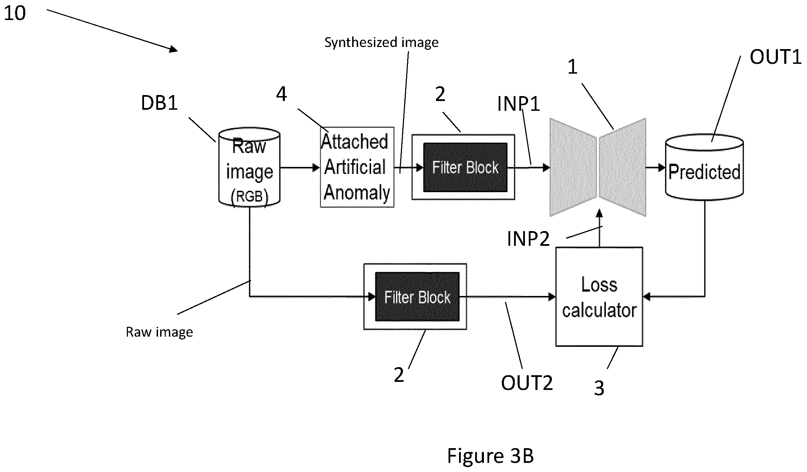

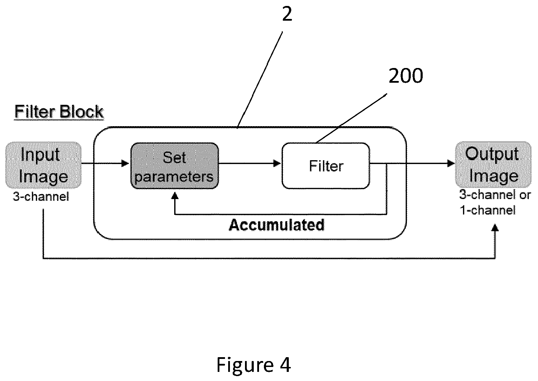

Figure 3A is a flowchart of a method, according to an embodiment, of unsupervised training of an autoencoder 1 to detect anomalies in images, that is only anomaly/defect-free images are used in the training. Figure 3B is a block diagram of training apparatus 10 suitable for carrying out the method of Figure 3A. In step S1 of the method, a training image dataset DB1 is acquired. The training image dataset DB1 consists of images known to be free of a type of anomaly to be detected, i.e. an element in the image which is transparent or an element in the image which is opaque but difficult to discern against part of the image around the element. The unsupervised training of the autoencoder 1 is carried out over a plurality of epochs until the autoencoder 1 is trained to a standard desired by a user. In each epoch steps S2 to S9 are carried out. In steps S2 to S4 a first input INP1 is derived and fed into the autoencoder 1. The first input INP1 is derived by, at step S2, synthesizing an image (for example using attached artificial anomaly module 4) by superimposing on an image of the training image dataset DB1 at least one artificial anomaly of the type to be detected, and then, at step S3, inputting the synthesized image to at least one filter block (module) 2 comprising at least one filter (see Figure 4, for example) adapted to increase visibility of anomalies of the type to be detected. More details of the filer block 2 are provided later. At step S4 the output INP1 of the filter block 2 is fed to the autoencoder 1, at step S5 an image OUT1 is output from the autoencoder 1, and at step S6 the image OUT1 output by the autoencoder is fed to a loss calculator 3. The output image OUT1 represents a reconstructed image including the predicted location of each artificial anomaly superimposed on the synthesized image at the current stage of the training process. In parallel, at steps S7 to S9 a second input INP2 is derived and fed into the autoencoder 1, the second input INP2 being derived by, at step S7, feeding the raw image of the training image dataset through the filter block 2, and, at step S8, feeding the output OUT2 of the filter block 2 resulting from the raw image to the loss calculator 3. At step S9 the output INP2 of the loss calculator 3 is also fed to the autoencoder 2.

As mentioned above, Figure 3B shows a training apparatus 10 suitable for training an autoencoder 1 in accordance with the method of Figure 3A, training apparatus 10 comprising a filter block 2, a loss calculator 3 for calculating the loss between raw and predicted images, and an attached artificial anomaly module 4. One or more additional layers/channels of information obtained from filter block 2 are added to raw RGB images from database DB1. The filter block 2 is an accumulation of filter parameters. The types of filter parameter will depend on the filter(s)/operator(s) used in the filter block 2, such as Sobel (which is useful for emphasizing edges), blur or normalization operators. For example, a blur operator has blur rate as a parameter that defines how much to blur the image, the Sobel operator has the derivative direction as parameters, and a normalisation operator has lower/upper boundary and normalisation method as parameters. Furthermore, noise may be removed with an accumulation of filters. For example, Sobel operators help with distortion identification, blurring operators help with removal of noise, and normalization operators help with enhancing the colour difference between the background and the anomaly.

By accumulating filter parameters, the aim is to identify features in the image that will assist in identifying anomalies and provide additional channels to add to the training images to enhance training. In the context of the present application, accumulation of filter parameters may be taken to mean the addition of successive filter loops on top of each other. That is, filtering steps using different filters and/or filter parameters are repeated, with the output of one filtering step being the input of the next, until a desired outcome is achieved.

The filter block 2 is used both in a training phase, in order for the network to learn the features of the filter(s) in the normal state, and also in the testing phase when trying to identify anomalies in test data. The filter block 2 is employed in every processing step of the raw image in the training phase, after attachment of artificial anomalies and before loss calculation between raw and predicted images. The same filter block 2 is used in testing in order to be able to enhance the appearance of anomalies and improve performance of detection. In the testing phase, the images may be either defect or defect-free images.

The filter block 2 may comprise a single operator with variable parameters, or variable operators with single parameters, or variable operators with variable parameters. The filter block 2 applies to an input image at least two successive filtering steps, where after applying a first one of the filtering steps the input image is an image output from the filter in the preceding filtering step. The at least two successive filtering steps may comprise at least one of: (i) filtering the input image using a filter with a first set of filter parameters and then filtering the input image using the same filter with a second set of filter parameters different to the first set of filter parameters; and (ii) filtering the input image using a filter of a first type and then filtering the input image using a filter of a second type different to the first type.

The filters and/or filter parameters used in the filter block 2 will depend on the task at hand. For example, for detection of anomalies in images comprising transparent liquids it may be appropriate to use filters which have been found useful in edge detection techniques, such as a Sobel filter, since these are able to identify the edges of a liquid spilt onto a surface which usually stick out more than the center of the liquid. The Sobel operator is used to take derivatives in horizontal and vertical directions using matrix multiplication in order to outline the edges of any object present in the input image. A combination of Sobel operators, blurring filters and normalisation filters may provide good results in highlighting anomalies that are hard to identify only with normal RGB values. There are factors that may affect the visibility of anomalies other than transparency. For example, if an image including an anomaly is made outside on a sunny day, the image will be very bright. In this case, a Sobel filter may not help to identify the edges of the anomaly, but it is possible that using another filter that lowers brightness will be more beneficial.

A filter block 2 accumulates features from various parameters of a filter. For example, when using a Sobel filter, both horizontal and vertical directions may be accumulated. A user may choose to use as many such filter blocks 2 as necessary in a network to improve performance. Figure 4 is a block diagram illustrating the features of a filter block 2 for use in an embodiment, where different filter parameters of a single type of filter 200 are accumulated to improve anomaly detection in images. In Figure 4, an input image is processed by filter 200, such as a blurring operator with a parameter blur rate = x, and this procedure is repeated as many times as required, where the filter and/or parameter may be changed. For example, an image may be passed through a blurring operator firstly with a blur rate = 3, then the output image is passed through with a blur rate = 5, then similarly with blur rate = 7. The blurring operator may then, for example, be changed to a normalisation operator.

The filter block 2 may instead comprise two or more different filters connected in series, each filter after the first being applied to an already filtered image and not the raw image. For example, an image may be passed through firstly a blurring operator with blur rate = 3, then passed through a Sobel operator with derivatives in the horizontal direction, then passed through the Sobel operator with derivatives in the vertical direction. Using a filter block having two or more filters in series may allow the filtering process to be more complex, permitting a deeper investigation into specific anomalies.

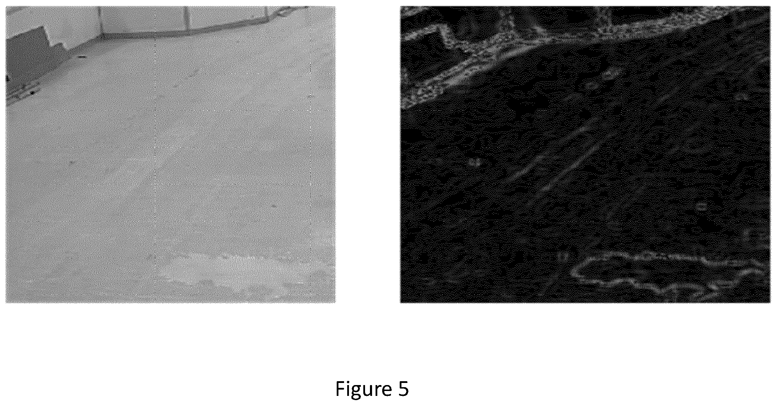

Figure 5 shows an example image output from a filter block 2 (right hand side) compared to an unfiltered image containing transparent anomalies (left hand side), using additional information obtained from the accumulation of Sobel operators and normalization in the filter block 2. Such accumulation of operators helps to reveal the distortion caused in the image from the transparent anomalies, and may also remove noise.

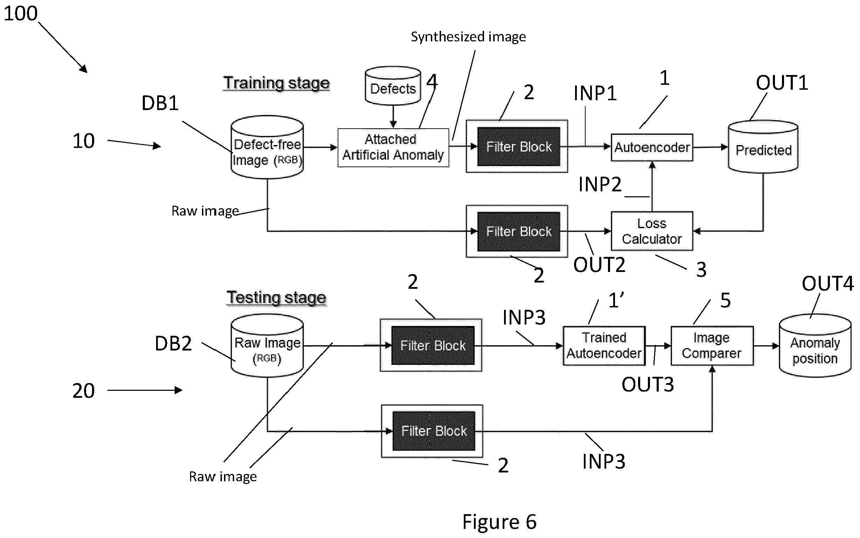

Figure 6 is a block diagram of an anomaly detection system 100 according to an embodiment.

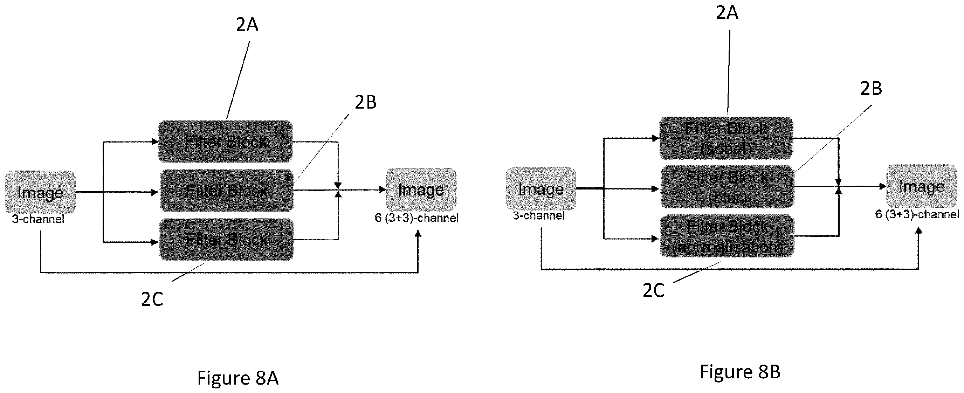

As mentioned above with reference to Figure 3B, training apparatus 10 of the system 100 contains the following components:
- Autoencoder 1: the autoencoder learns the latent features of defect-free samples. Use of the filter block 2 helps the autoencoder to identify and remove transparent defects.
- Loss Calculator 3: the loss calculator may use a single loss function (for example, L2 loss), or a combination of loss functions (for example, L2 loss with one or more other loss functions), to calculate the difference between input and reconstructed images in order to provide feedback to the autoencoder on how well it is performing. The autoencoder is trained to minimise losses so that the raw and predicted images are as similar to one another as possible.
- Raw Image (RGB) Database DB1: defect-free raw RGB image data is input at the initial stage of training. As previously mentioned, embodiments are trained using only defect-free samples in order for the autoencoder to learn the latent features of the normal (defect-free) state.
- Attached Artificial Anomaly Module 4: In a first arm of the training process, which feeds into the filter block 2 feeding into the autoencoder 1, attached artificial anomaly module 4 creates synthesized images by attaching (superimposing) artificial defects to (on) the defect-free raw images at every iteration of the training. The transparency, size, shape and number of defects is chosen at random.
- Filter Block 2: both the first and second arms of the training process use the same filter block 2 to add additional channels to the three channels of the RGB image. These additional channels are generated from an accumulation of filter operators (e.g. Sobel, blur and/or normalization operators) which extract information for identifying transparent anomalies via identification of distortion and noise elimination. The filter block 2 needs to be added to every stage of training and testing. The number of different filter blocks 2 added to the system may vary. Depending on the task at hand it may be beneficial to include more than one type of filter block 2 in order to address different issues of anomaly detection. Figure 8A illustrates a multiple filter block having three different filter blocks 2A, 2B and 2C arranged in parallel, which may be used instead of a single filter block 2. This has the benefit that each filter block adds a different channel, in addition to the normal three channel (RGB) image, thus providing a different perspective with each channel added.
- Predicted Output OUT1: the reconstructed, i.e. predicted, image from the autoencoder 1 is fed back to the loss calculator 3. The process continues until the final epoch of training has been completed.

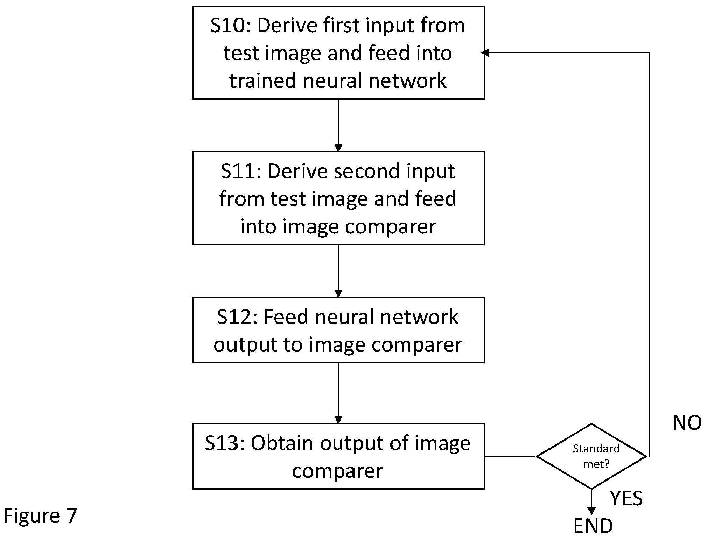

In an embodiment, the trained autoencoder 1' may undergo testing using a testing image dataset DB2, comprising images known to be free of the type of anomaly to be detected and images including anomalies of the type to be detected. Testing may be carried out by testing apparatus 20 over a plurality of epochs until a user is satisfied that the trained autoencoder 1' has been trained to a desired standard. Figure 7 is a flowchart of a testing method according to an embodiment. In each epoch the following steps S10 to S13 of Figure 7 are carried out. In step S10 a first input INP3 is derived and fed into the trained autoencoder 1', the first input INP3 being derived by feeding an image of the testing image dataset DB2 through the at least one filter module 2. In step S11 a second input INP3 is derived and fed into an image comparer 5, the second input INP3 being derived by feeding the image of the testing image dataset DB2 through the at least one filter module 2. In step S12 an output OUT3 of the trained autoencoder 1' is fed to the image comparer 5. In step S13 an output OUT4 of the image comparer 5, intended to indicate a location of an anomaly in the image if present, is obtained.

Clearly it is desirable to test the trained autoencoder in order to see if the desired performance increase has been achieved (although it is possible that the autoencoder 1 has been trained to the desired standard at the first attempt). During testing, the filter block 2 is also used, as the network was trained to act with the filter block 2 before the autoencoder 1. If the filter block 2 is not provided in the testing phase the results will be distorted, as the input to the trained autoencoder 1 will be vastly different to what it was during the training phase. As a very basic example, if in training a filter block 2 applied a greyscale conversion, the autoencoder 1 would learn to identify anomalies in only black and white. If the same filter block 2 is not applied in the testing phase, then a colour image will be passed to the trained autoencoder 1 and the output will not be as desired.

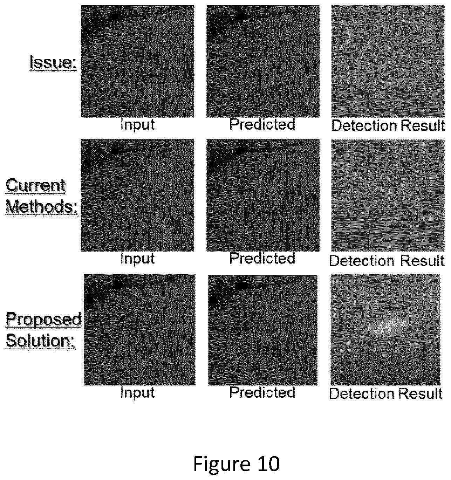

As shown in Figure 6, in addition to filter block 2 testing apparatus 20 of the system 100 contains the following components:
- Raw Image (RGB) Database DB2: raw image data forming a test dataset is input at the initial stage of testing. It includes both defect and defect-free images in order to test the performance of the unsupervised method.
- Trained Autoencoder 1': the trained autoencoder 1' resulting from the training stage has the task of producing a reconstructed image OUT3 from the (filtered) input data INP3 to be compared directly with the (filtered) input data INP3 and provide the exact location of a defect, i.e. any difference between the two. In this stage the trained autoencoder 1' has fixed weights and does not receive any feedback.
- Image Comparer 5: similar to the loss calculator 3 in the training stage, it compares the input test image INP3 with the reconstructed image OUT3 from the trained autoencoder 1'. The comparison will result in the location of the defect/anomaly in the image which will be output as the anomaly position OUT4.
- Anomaly Position OUT4: current methods struggle to correctly identify the location of transparent/hard to see anomalies, and may even produce a completely black output, meaning no anomaly has been detected. However, use of a filter block 2 as described allows the location of transparent or hard to see defects to be correctly identified consistently and shown on the output image OUT4, for example as white pixels on a black image (binary) or as yellow pixels in a multi-colour image (for example, as shown in Figure 10).
- The images output at the end of the testing stage are reviewed for accuracy. The more pixels that are correctly identified as anomalous or not, the higher the quality of the results. If testing produces an unacceptable level of errors, it means that the combination of filters in the filter block 2 was unsuccessful in helping to identify transparent or hard to see defects. If that happens, the filter block 2 used will be redesigned. In this scenario, usually there is not a high level of errors in the sense of false positives, as it is hard to identify them, but there is a high level of false negatives, i.e. lack of identification of the transparent or hard to see defect.

A Sobel filter consists of two 5x5 kernels which are convolved with an image to calculate approximations of derivatives, one for horizontal and one for vertical. In an embodiment, the Sobel operators that are used for the accumulation are a combination of a vertical derivative, a horizontal derivative and, simultaneously, both vertical and horizontal derivatives, while the kernel size remains 5x5 for all of those. Even though a Sobel filter provides only an approximation, its ability to obtain the edges of an anomaly is beneficial in the identification of transparent anomalies. As mentioned above, the reason for this is that the outline shape of even a transparent liquid may be found when detecting edges, as was shown in Figure 5.

Additionally, further operations may be applied alongside the Sobel filter, such as normalization and blurring to remove noise, to better highlight unique features of transparent anomalies. Based on Figure 8A, Figure 8B illustrates, by way of example, one proposed combination of filter blocks 2A, 2B, 2C to enhance transparent anomaly detection. The accumulation of Sobel filters are helpful in the localisation of the anomaly's perimeter, the accumulation of blur filters are helpful in removing noise, and the accumulation of normalization filters are helpful in improving the colour disparity between the anomaly and the background.

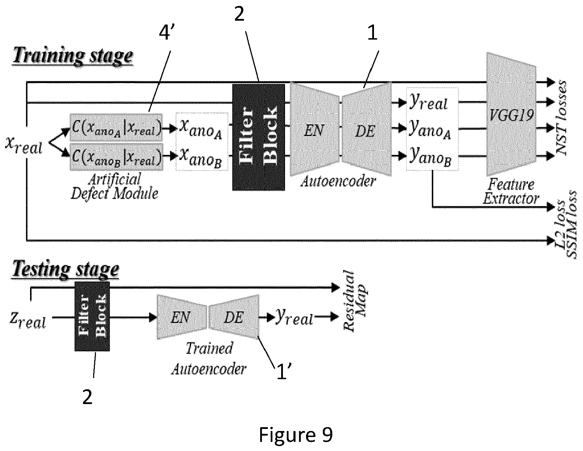

Figure 9 outlines an example of network architecture for the training and testing stages. A filter block 2 is provided before the autoencoder 1 (1') in both the training and testing stages. In the training stage an artificial defect module (equivalent to the aforementioned attached artificial anomaly module 4) synthesizes images by attaching (superimposing) artificial defects to (on) a normal (i.e. defect-free) image, *xᵣₑₐₗ*, at every iteration. The transparency, size, shape and number of defects is chosen at random. In this embodiment the artificial defect module creates two different anomalous images, *x_{anoA}* and x*_{anoB},* resulting from *xᵣₑₐₗ*, to help enhance performance during training by using additional images. The filter block 2 is applied to all three images, *xᵣₑₐₗ, x_{anoA}, x_{anoB},* which are then processed through the autoencoder 1. In the testing stage, test images *zᵣₑₐₗ* (with and without defects) are fed through the filter block 2 and the trained autoencoder 1'. In the training stage, outputs *yreal, y_{anoA}, y_{anoB}* from the autoencoder are input into a VGG19 Feature Extractor, which outputs NST losses. The calculation of the NST losses, together with the L2 and SSIM losses shown, are equivalent to the loss calculator 3 in Figure 3B.

When the autoencoder has been appropriately trained (and tested), it may be used to detect transparent and hard-to-see anomalies in images. The images to be examined must first be fed through a filter block of the same kind used to train the autoencoder before being input to the trained autoencoder.

### Worked Example

### Dataset

Video recordings were obtained to illustrate a working example of an embodiment. As can be seen in Figure 1A, a clear warehouse floor with no apparent anomalies present was the normal (i.e. defect-free) input provided in the training stage, but for use in the test phase the input, as seen in Figure 2.2, included images where there is a liquid spillage on the floor. Initially, 56 videos of various lengths and different kinds of liquid spills were provided. The video resolution was 1920x1080, which was cropped to 900x900 and then resized to 256x256.

### Training and Testing

The training and testing stages were implemented in PyTorch. A batch size of eight 256x256 images from the dataset was used for training the network. Here a single filter block was used. The filter block started with converting the image to grayscale, followed by a blurring filter with blur rate = 9, then proceeded with a Sobel filter with kernel = 5 in the horizontal direction, then in the vertical direction and then in both directions, and lastly finished with normalisation with min=0, max=255 and normalisation type, cv2.NORM_MINMAX. The model was optimized using the ADAM optimizer with a learning rate=2x10⁻⁴, *β*₁=0.5, *β*₂=0.999, eps=10⁻⁸, weight decay=0 and amsgrad=False.

### Result

Figure 10 illustrates: in the first row, the issue of detecting transparent anomalies in images; in the second row, how current anomaly detection methods struggle to improve detection performance of such anomalies; and in the third row, the results according to the present example using an embodiment. It is difficult to display a four-channel image correctly in two or three dimensions, as image packages usually only display one or three-channel images. However, for the neural network there is of course no need for visual observation of the additional fourth channel which adds knowledge for facilitating anomaly detection.

The right column of the top, middle and bottom rows of the series of images shown in Figure 10 highlights expected detection images, that is these images demonstrate examples of what the difference should be, in order for the transparent anomaly to be detected. The one-channel images in the left column of the bottom row are the output additional channels from a blur and normalization filter block (the top and middle row images of the left column are simple grayscale conversion images by way of comparison). In the middle column of the bottom row, the images shown are the reconstructed output of the trained autoencoder (the top and middle row images of the middle column are the reconstructed output of an autoencoder trained with only the grayscale conversion images of the left column). Therefore, using a filter block to accumulate filter parameters and add them as an additional channel to a neural network, it is possible to identify the location of a transparent anomaly more accurately.

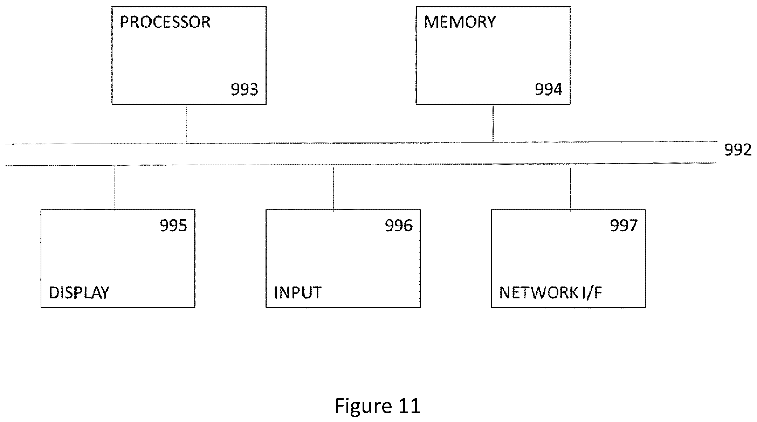

Figure 11 is a block diagram of a computing device, such as a data storage server, which embodies the present invention, and which may be used to implement some or all of the operations of a method embodying the present invention, and perform some or all of the tasks of apparatus of an embodiment. For example, the computing device of Figure 11 may be used to implement some or all the tasks and/or perform some or all the operations of the apparatus shown in Figure 3B, 4, 6, 8A, 8B and/or 9, and/or to implement some or all of the processes described with reference to Figures 3A, 4, 6, 7, 8A and/or 8B.

The computing device comprises a processor 993 and memory 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to store information, such as the training image database DB1 and/or the testing image database DB2, and/or carry computer-executable instructions. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing some or all of the steps shown in Figure 3A or Figure 7, or for implementing one or more of the processes described with reference to Figure 3A or Figure 4 or Figure 6 or Figure 7 or Figure 8A or Figure 8B. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figure 3A and/or Figure 7 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as images from the training image database DB1 and/or the testing image database DB2 and/or images output by image comparer 5, and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 11. Such a computing device need not have every component illustrated in Figure 11, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method of unsupervised training of a neural network to detect anomalies in images, the method comprising:
acquiring a training image dataset comprising images known to be free of a type of anomaly to be detected, the type of anomaly to be detected comprising an element in the image which is transparent or an element in the image which is opaque but difficult to discern against part of the image around the element; and
carrying out unsupervised training of the neural network over a plurality of epochs, wherein in each epoch:
a first input is derived and fed into the neural network, the first input being derived by:
synthesizing an image by superimposing on an image of the training image dataset at least one artificial anomaly of the type to be detected, and
inputting the synthesized image to at least one filter module comprising at least one filter adapted to increase visibility of anomalies of the type to be detected,
wherein the at least one filter module applies to the input image at least two successive filtering steps where, after a first one of the filtering steps has been applied, the input image is an image output from a preceding filtering step, and the at least two successive filtering steps comprise at least one of:
filtering the input image using the at least one filter with a first set of filter parameters and then filtering the input image using the same filter with a second set of filter parameters different to the first set of filter parameters; and
filtering the input image using the at least one filter which is of a first type and then filtering the input image using another filter of a second type different to the first type; and
a second input is derived and fed into the neural network, the second input being derived by:
feeding the image of the training image dataset through the at least one filter module, and feeding an output of the at least one filter module resulting from the image to a loss calculator together with an image output by the neural network, which output image represents a reconstructed image including the predicted location of each artificial anomaly superimposed on the synthesized image.

2. A method as claimed in claim 1, further comprising, after carrying out the unsupervised training, carrying out testing of the trained neural network by:
acquiring a testing image dataset, comprising images known to be free of the type of anomaly to be detected and images including anomalies of the type to be detected; and
carrying out testing over a plurality of epochs, wherein in each epoch:
a first input is derived and fed into the trained neural network, the first input being derived by feeding an image of the testing image dataset through the at least one filter module;
a second input is derived and fed into an image comparer, the second input being derived by feeding the image of the testing image dataset through the at least one filter module; and
feeding an output of the neural network to the image comparer, wherein an output of the image comparer is intended to indicate a location of an anomaly in the image if present.

3. A method as claimed in claim 1 or 2, wherein synthesizing the images comprises superimposing on the image at least one artificial anomaly selected at random from a set of artificial anomalies differing from one another in at least one of transparency, size and shape.

4. A method as claimed in claim 1, 2 or 3, wherein each filter in the at least one filter module is one of: a Sobel filter; a normalizing filter; a blur filter.

5. A method as claimed in any preceding claim, wherein inputting the synthesized image to at least one filter module comprising inputting the synthesized image in parallel to at least two filter modules, and the output of the at least one filter module comprises the outputs of the at least two filter modules.

6. A method as claimed in claim 5, when read as appended to claim 2, wherein feeding the image of the testing image dataset through the at least one filter module comprises feeding the image in parallel to the at least two filter modules and obtaining the outputs of the at least two filter modules.

7. A method as claimed in any preceding claim, wherein the anomaly to be detected is at least one of: a transparent liquid on a surface; an opaque liquid on a surface of the same or similar colour as the liquid; a transparent substance; an opaque substance against a background of the same or similar colour as the substance; a transparent object; an opaque object against a background of the same or similar colour as the object.

8. A computer-implemented method of detecting anomalies in images, the method comprising:
acquiring an image which is to be processed to determine whether the image contains an anomaly; and
using a neural network trained in accordance with the method of any preceding claim to detect at least one anomaly in the image;
wherein an input to the trained neural network is derived from the image by feeding the image through a filter module as used in training the neural network.

9. Apparatus to train a neural network to detect anomalies in images, the apparatus comprising:
at least one processor;
at least one memory storing a training image dataset comprising images known to be free of a type of anomaly to be detected, the type of anomaly to be detected comprising an element in the image which is transparent or an element in the image which is opaque but difficult to discern against part of the image around the element;
an image synthesizer to synthesize an image by superimposing on an image of the training image dataset at least one artificial anomaly of the type to be detected;
at least one filter module comprising at least one filter adapted to increase visibility of anomalies of the type to be detected, the at least one filter module applying to an input image at least two successive filtering steps where, after a first one of the filtering steps has been applied, the input image is an image output from a preceding filtering step, and the at least two successive filtering steps comprise at least one of:
(i) filtering the input image using the at least one filter with a first set of filter parameters and then filtering the input image using the same filter with a second set of filter parameters different to the first set of filter parameters; and
(ii) filtering the input image using the at least one filter which is of a first type and then filtering the input image using another filter of a second type different to the first type; and
a loss calculator to calculate an error between input images;
the at least one memory further storing instructions to cause the processor to carry out unsupervised training of an neural network over a plurality of epochs, wherein in each epoch:
a first input is derived and fed into the neural network, the first input being derived by inputting a synthesized image from the image synthesizer to the at least one filter module, and
a second input is derived and fed into the neural network, the second input being derived by feeding the image of the training image dataset used to obtain the synthesized image through the at least one filter module, and feeding an output of the at least one filter module resulting from the image to the loss calculator together with an image output by the neural network, which output image represents a reconstructed image including the predicted location of each artificial anomaly superimposed on the synthesized image.

10. Apparatus as claimed in claim 9, further comprising an image comparer,
wherein the at least one memory further stores:
a testing image dataset, comprising images known to be free of the type of anomaly to be detected and images including anomalies of the type to be detected, and
instructions to cause the processor, after carrying out the unsupervised training, to carry out testing of the trained neural network over a plurality of epochs, wherein in each epoch:
a first input is derived and fed into the trained neural network, the first input being derived by feeding an image of the testing image dataset through the at least one filter module;
a second input is derived and fed into the image comparer, the second input being derived by feeding the image of the testing image dataset through the at least one filter module; and
feeding an output of the neural network to the image comparer, wherein an output of the image comparer is intended to indicate a location of an anomaly in the image if present.

11. Apparatus as claimed in claim 9 or 10, wherein each filter in the at least one filter module is one of: a Sobel filter; a normalizing filter; a blur filter.

12. Apparatus as claimed in any one of claims 9 to 11, wherein the anomaly to be detected is at least one of: a transparent liquid on a surface; an opaque liquid on a surface of the same or similar colour as the liquid; a transparent substance; an opaque substance against a background of the same or similar colour as the substance; a transparent object; an opaque object against a background of the same or similar colour as the object.

13. Apparatus to detect anomalies in images comprising:
a neural network trained to detect anomalies in images, where the neural network has been trained in accordance with the method of any one of claims 1 to 7, or has been trained by the apparatus of any one of claims 9 to 12;
a memory storing an image which is to be processed to determine whether the image contains an anomaly; and
at least one filter module, as used in the training of the neural network, to receive the image to be processed and output a filtered image to the neural network.

14. A method as claimed in any one of claims 1 to 8 or apparatus as claimed in any one of claims 9 to 13, wherein the neural network is an autoencoder.

## Amended claims

### Amended claims in accordance with Rule 137(2) EPC.

1. A computer-implemented method of unsupervised training of a neural network to detect anomalies in images, the method comprising:
acquiring a training image dataset comprising images known to be free of a type of anomaly to be detected, the type of anomaly to be detected comprising an element in the image which is transparent or an element in the image which is opaque but difficult to discern against part of the image around the element; and
carrying out unsupervised training of the neural network over a plurality of epochs, wherein in each epoch:
a first input is derived and fed into the neural network, the first input being derived by:
synthesizing an image by superimposing on an image of the training image dataset at least one artificial anomaly of the type to be detected, and
inputting the synthesized image to at least one filter module comprising at least one filter adapted to increase visibility of anomalies of the type to be detected,
wherein the at least one filter module applies to the input image at least two successive filtering steps where, after a first one of the filtering steps has been applied, the input image is an image output from a preceding filtering step, and the at least two successive filtering steps comprise at least one of:
filtering the input image using the at least one filter, the at least one filter having variable filter parameters, and the input image being filtered using a first set of the filter parameters and then being filtered using a second set of the filter parameters different to the first set of the filter parameters; and
filtering the input image using the at least one filter which is of a first type and then filtering the input image using another
filter of a second type different to the first type; and
a second input is derived and fed into the neural network, the second input being derived by:
feeding the image of the training image dataset through the at least one filter module to apply to the training image the at least two successive filtering steps, and feeding an output of the at least one filter module resulting from the image to a loss calculator together with an image output by the neural network, which output image represents a reconstructed image including the predicted location of each artificial anomaly superimposed on the synthesized image.

2. A method as claimed in claim 1, further comprising, after carrying out the unsupervised training, carrying out testing of the trained neural network by:
acquiring a testing image dataset, comprising images known to be free of the type of anomaly to be detected and images including anomalies of the type to be detected; and
carrying out testing over a plurality of epochs, wherein in each epoch:
a first input is derived and fed into the trained neural network, the first input being derived by feeding an image of the testing image dataset through the at least one filter module;
a second input is derived and fed into an image comparer, the second input being derived by feeding the image of the testing image dataset through the at least one filter module; and
feeding an output of the neural network to the image comparer, wherein an output of the image comparer is intended to indicate a location of an anomaly in the image if present.

3. A method as claimed in claim 1 or 2, wherein synthesizing the images comprises superimposing on the image at least one artificial anomaly selected at random from a set of artificial anomalies differing from one another in at least one of transparency, size and shape.

4. A method as claimed in claim 1, 2 or 3, wherein each filter in the at least one filter module is one of: a Sobel filter; a normalizing filter; a blur filter.

5. A method as claimed in any preceding claim, wherein inputting the synthesized image to at least one filter module comprising inputting the synthesized image in parallel to at least two filter modules, and the output of the at least one filter module comprises the outputs of the at least two filter modules.

6. A method as claimed in claim 5, when read as appended to claim 2, wherein feeding the image of the testing image dataset through the at least one filter module comprises feeding the image in parallel to the at least two filter modules and obtaining the outputs of the at least two filter modules.

7. A method as claimed in any preceding claim, wherein the anomaly to be detected is at least one of: a transparent liquid on a surface; an opaque liquid on a surface of the same or similar colour as the liquid; a transparent substance; an opaque substance against a background of the same or similar colour as the substance; a transparent object; an opaque object against a background of the same or similar colour as the object.

8. A computer-implemented method of detecting anomalies in images, the method comprising:
acquiring an image which is to be processed to determine whether the image contains an anomaly; and
using a neural network trained in accordance with the method of any preceding claim to detect at least one anomaly in the image;
wherein an input to the trained neural network is derived from the image by feeding the image through a filter module as used in training the neural network.

9. Apparatus to train a neural network to detect anomalies in images, the apparatus comprising:
at least one processor;
at least one memory storing a training image dataset comprising images known to be free of a type of anomaly to be detected, the type of anomaly to be detected comprising an element in the image which is transparent or an element in the image which is opaque but difficult to discern against part of the image around the element;
an image synthesizer to synthesize an image by superimposing on an image of the training image dataset at least one artificial anomaly of the type to be detected;
at least one filter module comprising at least one filter adapted to increase visibility of anomalies of the type to be detected, the at least one filter module applying to an input image at least two successive filtering steps where, after a first one of the filtering steps has been applied, the input image is an image output from a preceding filtering step, and the at least two successive filtering steps comprise at least one of:
(i) filtering the input image using the at least one filter, the at least one filter having variable filter parameters, and the input image being filtered using a first set of the filter parameters and then being filtered using the same filter with a second set of the filter parameters different to the first set of the filter parameters; and
(ii) filtering the input image using the at least one filter which is of a first type and then filtering the input image using another filter of a second type different to the first type; and
a loss calculator to calculate an error between input images;
the at least one memory further storing instructions to cause the processor to carry out unsupervised training of an neural network over a plurality of epochs, wherein in each epoch:
a first input is derived and fed into the neural network, the first input being derived by inputting a synthesized image from the image synthesizer to the at least one filter module, and
a second input is derived and fed into the neural network, the second input being derived by feeding the image of the training image dataset used to obtain the synthesized image through the at least one filter module to apply to the training image the at least two successive filtering steps, and feeding an output of the at least one filter module resulting from the image to the loss calculator together with an image output by the neural network, which output image represents a reconstructed image including the predicted location of each artificial anomaly superimposed on the synthesized image.

10. Apparatus as claimed in claim 9, further comprising an image comparer,
wherein the at least one memory further stores:
a testing image dataset, comprising images known to be free of the type of anomaly to be detected and images including anomalies of the type to be detected, and
instructions to cause the processor, after carrying out the unsupervised training, to carry out testing of the trained neural network over a plurality of epochs, wherein in each epoch:
a first input is derived and fed into the trained neural network, the first input being derived by feeding an image of the testing image dataset through the at least one filter module;
a second input is derived and fed into the image comparer, the second input being derived by feeding the image of the testing image dataset through the at least one filter module; and
feeding an output of the neural network to the image comparer, wherein an output of the image comparer is intended to indicate a location of an anomaly in the image if present.

11. Apparatus as claimed in claim 9 or 10, wherein each filter in the at least one filter module is one of: a Sobel filter; a normalizing filter; a blur filter.

12. Apparatus as claimed in any one of claims 9 to 11, wherein the anomaly to be detected is at least one of: a transparent liquid on a surface; an opaque liquid on a surface of the same or similar colour as the liquid; a transparent substance; an opaque substance against a background of the same or similar colour as the substance; a transparent object; an opaque object against a background of the same or similar colour as the object.

13. Apparatus to detect anomalies in images comprising:
a neural network trained to detect anomalies in images, where the neural network has been trained in accordance with the method of any one of claims 1 to 7, or has been trained by the apparatus of any one of claims 9 to 12;
a memory storing an image which is to be processed to determine whether the image contains an anomaly; and
at least one filter module, as used in the training of the neural network, to receive the image to be processed and output a filtered image to the neural network.

14. A method as claimed in any one of claims 1 to 8 or apparatus as claimed in any one of claims 9 to 13, wherein the neural network is an autoencoder.
